Europäisches Patentamt

European Patent Office

Office européen des brevets

(19)

(11) Veröffentlichungsnummer: **0 188 676 B1**

# (12) EUROPÄISCHE PATENTSCHRIFT

(45) Veröffentlichungstag der Patentschrift: 21.08.91

(51) Int. Cl.5: **H04M 3/62**, H04M 1/274

(21) Anmeldenummer: 85113637.4

(22) Anmeldetag: 26.10.85

(54) Verfahren zur Mehrfachausnutzung von Zielwahltasten an Endgeräten, insbes. Arbeits- und Abfrageplätzen an Fernsprechvermittlungsanlagen, insbes. Makler-Vielfachanlagen.

(30) Priorität: 22.01.85 DE 3501899

(43) Veröffentlichungstag der Anmeldung:
30.07.86 Patentblatt 86/31

(45) Bekanntmachung des Hinweises auf die
Patenterteilung:
21.08.91 Patentblatt 91/34

(84) Benannte Vertragsstaaten:
AT BE GB IT LU

(56) Entgegenhaltungen:
DE-A- 2 202 408
DE-A- 3 145 639
US-A- 4 186 279
US-A- 4 275 273

PATENT ABSTRACTS OF JAPAN, Band 9, Nr.
15 (E-291)[1738], 22. Januar 1985; & JP-A-59
161 993

ERICSSON REVIEW, Band 59, Nr. 2, 1982,
Seiten 58-66, Stockholm, SE; J. REINIUS et
al.: "DIAVOX Courier 700, digital system telephone for MD 110"

(73) Patentinhaber: **TELENORMA GMBH**
**Mainzer Landstrasse 128-146**
**W-6000 Frankfurt/Main(DE)**

(72) Erfinder: **Schmidt, Heinz**
**Egerstrasse 18**
**W-7120 Bietigheim(DE)**
Erfinder: **Bühler, Udo**
**Kugelrain 24**
**W-7336 Uhingen(DE)**
Erfinder: **Hutt, Hans-Ulrich**
**Adelberger Strasse 35**
**W-7336 Uhingen(DE)**

EP 0 188 676 B1

## Beschreibung

Die Erfindung betrifft ein Verfahren zur Mehrfachausnutzung von Zielwahltasten an Endgeräten, insbesondere Arbeits-und Abfrageplätzen an Fernsprechvermittlungsanlagen, insbesondere Makler-Vielfachanlagen, wie dies im Oberbegriff des Patentanspruches 1 näher bezeichnet ist.

Aus dem in den TN-Nachrichten 1969, Heft 69 ab Seite 10 abgedruckten Aufsatz über Betriebsmerkmale großen W-Nebenstellenanlage mit Multireed-Kopplern III W 6020 ist es bekannt, bei Vermittlungstischen oder Vermittlungsapparaten Zieltasten einzusetzen. Wie am Ende des Textes auf Seite 12 beschrieben ist, dienen diese Zieltasten dazu, beim Zuteilen von Amtsverbindungen zu häufig verlangten Nebenstellen einen Zeitgewinn zu erzielen. Mit einem einzigen Tastendruck markiert die Telefonistin den Sprechweg zur Nebenstelle. Außerdem ist auf Seite 13 beschrieben, daß als Zusatz zum Impuls-Zahlengeber ein elektronischer Rufnummerngeber vorgesehen ist. Dieser Rufnummerngeber kann ebenfalls mit Zieltasten angesteuert werden. Weiterhin heißt es, daß im Vermittlungsapparat bis zu 50 Zieltasten untergebracht werden können. Wie aus Bild 2 auf Seite 12 deutlich hervorgeht, sind diese Zieltasten in zwei mit unterschiedlichen Farben gekennzeichnete Gruppen unterteilt. Davon dient eine Gruppe für die Zuteilung von Amtsverbindungen zu Nebenstellen und die andere Gruppe zur Ansteuerung des elektronischen Rufnummerngebers, womit ebenfalls mit einem einzigen Tastendruck Wählverbindungen im öffentlichen Fernsprechnetz aufgebaut werden können. Bei einer derartigen Anordnung von Zieltasten ist von der Gesamtzahl der Tasten bindend festgelegt, wieviele für das Zuteilen von Amtsgesprächen zu Nebenstellen vorgesehen sind. Der Rest steht dann für das Aufbauen von Verbindungen ins öffentliche Netz zur Verfügung. Da bei Vermittlungsplätzen und Vermittlungsapparaten im allgemeinen nicht beliebig viel Raum zur Verfügung steht, kann die Anzahl der Zieltasten nicht vergrößert werden, wenn ein Mehrbedarf an Internzielen und/oder Externzielen besteht.

Ein Verfahren und Vorrichtung zum Speichern und Senden von Daten in Fernmeldeanlagen ist aus der DE-OS 3145639 bekannt. Dabei sind zwei Ebenen vorgesehen, wodurch mit jeder Zieltaste eines von zwei möglichen Zielen ansteuerbar ist. Deshalb muß vor dem Betätigen einer Zieltaste darauf geachtet werden, ob die für das gewählte Ziel zuständige Ebene richtig ausgewählt ist. Falls dies nicht der Fall ist, muß zunächst eine Umschalteinrichtung betätigt werden. Um dies den Benutzer deutlich zu machen, ist die Umschalteinrichtung mit einem Klappmechanismus verbunden, der Beschriftungsfelder sichtbar macht, sodaß einwandfrei erkannt werden kann, welches Ziel mit einer Zieltaste ansteuerbar ist.

In den "Patent Abstracts of Japan", Band 9, Nr. 15 (E-291) vom 22.01.1985 ist die japanische Anmeldung JP A 59 161 993 erwähnt, wo eine Tastentelefonanlage beschrieben wird. Bei dieser Telefonanlage werden die direkten Verbindungen zu anderen an der gleichen Anlage angeschlossenen Teilnehmern durch einen direkten Tastendruck aufgebaut, wie dies bei den bekannten Reihenanlagen der Fall ist. Für den Aufbau einer Externverbindung ist zunächst eine Außenleitung zu belegen, sodann muß eine Kurzwahltaste betätigt werden, damit eine der Teilnehmer-Ruftasten für den Aufbau der Externverbindung benutzt werden kann. Es müssen also insgesamt drei Tasten betätigt werden, damit eine eingespeicherte Rufnummer für eine Externverbindung automatisch ausgesendet werden kann. Es sind keine Angaben darüber gemacht, auf welche Weise die Ziele von einer Bedienungsperson eingespeichert werden können. Ein Gerät zum Speichern und Erzeugen von Wahlinformation ist aus der US-PS 4186 279 bekannt. Dieses Gerät ist als Zusatz zu einem Fernsprechapparat konzipiert und wird als separate Wählhilfe benutzt. Es dient nur zum Aufbauen von Verbindungen einer Kategorie durch Tastendruck anstelle einer Wählscheibe oder einer Wähltastatur. Zum Einprogrammieren von Rufnummern durch den Teilnehmer ist eine besondere Taste vorgesehen. Dabei muß jedoch ebenso wie beim Abrufen der gespeicherten Rufnummern die Position einer Schiebevorrichtung beachtet werden, um die gewünschte Zuordnung zu einer Zieltaste zu erreichen.

Ausgehend vom vorgenannten Stand der Technik ist es Aufgabe der Erfindung, ein Verfahren anzugeben, womit bei einer Vielzahl durch einfachen Tastendruck auszuwählenden Verbindungen eine Vereinfachung beim Abrufen der gespeicherten Ziele und bei deren Einspeicherung erreicht wird. Dabei sollen die Tasten für den Aufbau von verschiedenartigen Verbindungen benutzt werden können, ohne daß die Anzahl der Tasten dadurch erhöht werden muß. Um die Bedienungsvorgänge an Makler-Vielfachplätzen zu beschleunigen, soll die Anzahl der Tastendrücke, die zum Aufbau einer Verbindung und zum Einspeichern der Ziele erforderlich sind, auf ein Mindestmaß beschränkt werden.

Diese Aufgabe ward durch eine Merkmalskombination gelöst, wie sie im Patentanspruch 1 angegeben ist. Damit wird in vorteilhafter Weise erreicht, daß nach der Belegung einer Leitung sofort zum Aufbauen einer Verbindung die Zieltaste betätigt werden kann, wobei auch ohne Umschalteinrichtung eine Mehrfachausnutzung jeder einzelnen Zieltaste gegeben ist. Nur dann, wenn die Anzahl der Ziele einer Kategorie größer ist als die zur Verfügung stehende Anzahl von Zieltasten müssen zusätzliche Umschalteinrichtungen vorgesehen werden, die jedoch ohne Schwierigkeiten anzubringen sind, ohne daß an dem Verfahren etwas geändert werden muß. Diese und andere Weiterbildungen der Erfindung sind in den Unteransprüchen aufgeführt.

Ein Ausführungsbeispiel der Erfindung wird nachfolgend anhand von Zeichnungen näher erläutert.

Es zeigt

Fig. 1 das Bedienungsfeld eines Makler-Vielfachplatzes.

Fig. 2 das Prinzip-Schaltbild einer für die Durchführung des Verfahrens geeigneten Schaltungsanordnung.

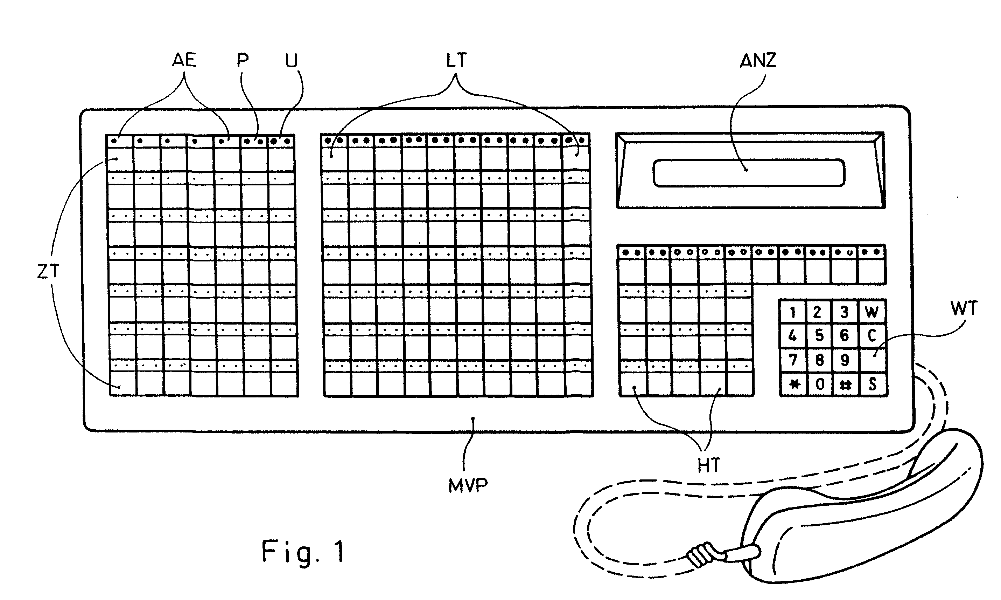

Bei dem in Fig. 1 dargestellten Bedienungsfeld eines Makler-Vielfachplatzes MVP befindet sich an der linken Seite ein Feld mit beispielsweise 40 Zieltasten ZT. Den Zieltasten ZT sind Anzeigeelemente AE zugeordnet, deren Funktion später noch erläutert wird. Im mittleren Teil des Arbeitsfeldes des Makler-Vielfachplatzes MVP befinden sich Leitungstasten LT, bei deren Betätigung eine zum Aufbau von Verbindungen geeignete Fernsprechleitung direkt belegt wird. Auch diesen Tasten können Anzeigelemente zugeordnet sein, die den Belegt- und Betriebszustand der betreffenden Leitung anzeigen. Im rechten Teil des Arbeitsfeldes sind neben einer Anzeigeeinrichtung ANZ verschiedene Funktionstasten angeordnet, von denen aber nur diejenigen erläutert werden, die zum Gegenstand der vorliegenden Erfindung gehören. Außer einer bekannterweise angeordneten Wähltastatur WT sind Haustasten HT angeordnet, die für die Erfindung eine wesentliche Rolle spielen.

Wenn vom Makler-Vielfachplatz aus eine Verbindung aufgebaut werden soll, so ist entweder eine der Leitungstasten LT oder eine der Haustasten HT zu betätigen. Natürlich kann daran anschließend mit der Wähltastatur WT jede Art von Verbindung durch Eintasten von mehreren Ziffern einer Rufnummer in bekannter Weise aufgebaut werden. Jedoch stellt das Benutzen von Zieltasten ZT eine wesentliche Arbeitserleichterung dar, weil mit einem einzigen Tastendruck die Verbindung hergestellt wird. Dies gilt insbesondere auch für Verbindungen, die zwischen den Makler-Vielfachplätzen untereinander hergestellt werden, wie es bei derartigen Anlagen häufig vorkommt.

Damit für diesen Betriebsfall keine zusätzlichen Zieltasten ZT vorgesehen werden müssen, werden die für das Aufbauen aller sonstigen Verbindungen vorhandenen Zieltasten ZT auch für diesen Betriebsfall mitbenutzt. Selbstverständlich können bei den mittels der Haustasten HT aufgebauten Verbindungen auch Ziele einprogrammiert sein, bei denen die Verbindungen nicht zu Makler-Vielfachplätzen MVP sondern zu anderen Teilnehmeranschlüssen führen.

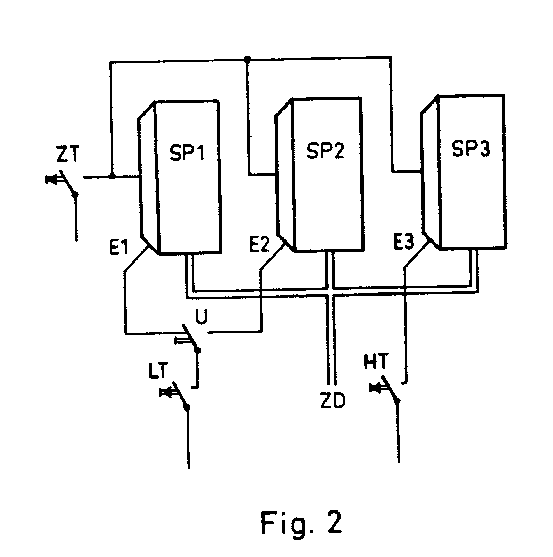

Wie in Fig. 2 schematisch dargestellt ist, kann mit jeder einzelnen Zieltaste ZT eine bestimmte Speicherzeile in mehreren Speichern SP1 bis SP3 direkt adressiert werden. Die Auswahl des Speichers SP, aus dem die gewünschte Zielinformation ausgelesen werden soll, erfolgt dadurch, daß an dem betreffenden Aktivierungseingang E1, E2 oder E3 ein die Adressierung ermöglichendes Potential angelegt wird. Wie aus der Zeichnung ersichtlich ist, wird je nach Stellung der Umschalttaste U bei der Betätigung einer Leitungstaste LT mit der darauf erfolgenden Betätigung einer Zieltaste ZT entweder ein Ziel aus dem ersten Speicher SP1 oder aus dem zweiten Speicher SP2 ausgelesen. Die Zieldaten ZD gelangen dann zu einer Wahlsende- oder einer Wahlauswerteeinrichtung, so daß in bekannter Weise das Aufbauen einer Verbindung vonstatten geht.

Wird dagegen für das Aufbauen einer Verbindung eine Haustaste HT betätigt, so wird für die Adressierung ausschließlich der dritte Speicher SP3 freigegeben, so daß bei Betätigen einer Zieltaste ZT eines der in diesem Speicher SP3 gespeicherten Internziele ausgelesen wird. Die hier mit einfachen Tastenkontakten dargestellte Auswahlschaltung ist selbstverständlich mit Hilfe elektronischer Verknüpfungs- und Speicheranordnungen so gestaltet, daß die an den die Adressierung ermöglichenden Eingänge E benötigten Signale solange anliegen, wie es für die Funktion erforderlich ist. Falls mit der vorhandenen Anzahl von Zieltasten ZT noch mehr Ziele angesteuert werden sollen, so ist es leicht möglich, weitere Speicher SP vorzusehen. Auch dem für das Ansteuern von internen Zielen vorgesehenen Speicher SP3 können weitere Speicher hinzugefügt werden, die mit einem dem Auswahlschaltmittel U funktionsgleichen Element aktivierbar sind.

Im folgenden wird noch beschrieben, wie auf einfache Weise bei jedem Makler-Vielfachplatz MVP die Ziele auf einfache Weise einprogrammiert werden können. Um den Programmiervorgang einzuleiten, wird zunächst die im Zieltastenfeld befindliche Programmiertaste P betätigt. Sodann wird mit der Wähltastatur WT eine beliebige Rufnummer in einen Zwischenspeicher eingetastet, wobei diese Information gleichzeitig zur Kontrolle im Anzeigefeld ANZ erscheint. Nach diesem Vorgang ist lediglich diejenige Zieltaste ZT zu betätigen, mit der später das betreffende Ziel angesteuert werden soll. Auf die gleiche Weise lassen sich jeweils zu einer Zieltaste ZT gehörig weitere Ziele einprogrammieren. Wenn der Progammiervorgang beendet ist, so wird die Programmiertaste P erneut betätigt. Die Aktivierung des Merkmals "Programmieruug" wird durch ein der Programmiertaste P zugeordnetes Anzeigeelement AE gekennzeichnet. Die weiteren den Zieltasten zugeordnete Anzeigeelemente AE dienen dazu, den Besetztzustand der Ziele anzuzeigen, die beim Betätigen einer Haustaste HT angesteuert werden können.

**Patentansprüche**

1.  Verfahren zur Mehrfachausnutzung von Zieltasten (ZT) an Endgeräten, insbesondere Arbeits- und Abfrageplätzen (MVP) an Fernsprech-Vermittlungsanlagen, insbesondere Maklervielfachanlagen, die mit mehreren Anschlußleitungen verbunden werden können oder dazu direkten Zugang haben, und bei denen Zieltasten (ZT) vorgesehen sind, womit durch einen einzigen Tastendruck eine Internverbindung direkt aufgebaut werden kann, oder die zum Aufbauen einer Externverbindung notwendige Rufnummer automatisch ausgewählt wird und zu diesem Zweck mit den Zieltasten (ZT) Speicher (SP) angesteuert werden, wo die zum Verbindungsaufbau dienenden Informationen abgelegt sind,

    dadurch gekennzeichnet,

    daß nach dem Betätigen einer Leitungstaste (LT) für das Belegen einer Externleitung oder nach dem Betätigen einer Haustaste (HT) für das Belegen einer Internleitung nur noch das Betätigen einer Zieltaste (ZT) erforderlich ist, um eine Verbindung aufzubauen, wobei die Auswahl der den Zieltasten (ZT) jeweils zuzuordnenden Gruppe von in Speichern (SP1 bis SP3) abgelegten Rufnummern oder Anschlußkennzeichnungen durch die Art der Anschlußleitung bestimmt wird, mit der ein Makler-Vielfachplatz (MVP) gerade verbunden ist, so daß mit den selben Zieltasten (ZT) Externverbindungen und Internverbindungen insbesondere der Makler-Vielfachplätze (MVP) untereinander aufbaubar sind,

    und daß eine Programmiertaste (P) vorgesehen ist, bei deren Betätigung ein Einspeichervorgang eingeleitet wird, wobei die mit der Wähltastatur (WT) eingetastete und im Anzeigefeld (ANZ) sichtbar gemachte Rufnummer eines Zieles an denjenigen Speicherplatz in den Speichern (SP1, SP2 und SP3) eingespeichert wird, der durch das nachfolgende einfache Betätigen der betreffenden Zieltaste (ZT) markiert wird.

2.  Verfahren nach Anspruch 1,

    dadurch gekennzeichnet,

    daß zusätzliche Auswahlschaltmittel (U) vorgesehen sind, wenn die Anzahl der jeweils anzusteuernden Ziele größer ist als die Anzahl der Zieltasten (ZT).

3.  Verfahren nach Anspruch 1,

    dadurch gekennzeichnet,

    daß jede einzelne Zieltaste (ZT) mit mehreren Namen, Bezeichnungen und/oder Rufnummern beschriftet ist.

4.  Verfahren nach Anspruch 1,

    dadurch gekennzeichnet,

    daß den Zieltasten (ZT) Anzeigeelemente (AE) zugeordnet sind, die den Belegtzustand der Internziele anzeigen.

**Claims**

1.  Method for the multiple utilisation of destination keys (ZT) at terminal devices, in particular operating and answering positions (MVP) at telephone installations, in particular multiple dealer installations, which can be connected with several subscriber's lines or have direct access thereto and in which destination keys (ZT) are provided, whereby an internal connection can be established directly by a single key depression or the subscriber's number necessary for the establishment of an external connection is selected automatically and stores (SP), where the information data serving for the establishment of the connection are filed, are driven for this purpose by the destination keys (ZT), characterised thereby, that after the actuation of line key (LT) for seizing an external line or after the actuation of a house key (HT) for seizing an internal line, only the actuation of a destination key (ZT) is still necessary to establish a connection, wherein the selection of the group, which is respectively to be associated with the destination keys (ZT), of subscriber's numbers or connection indentifications filed in stores (SP1 to SP3) is determined by the kind of the connecting line, with which a dealer multiple position (MVP) has just been connected so that external connections and internal connections, in particular of the dealer multiple positions (MVP) one among the other, are established by the same destination keys (ZT), and that a programming key (P) is provided, on the actuation of which a storage operation is initiated, wherein the subscriber's number, which has been keyed in by the dialling keyboard (WT) and made visible in the indicating field (ANZ), of a destination is entered into that storage place in the stores (SP1, SP2, SP3), which is marked by the following single actuation of the target key (ZT) concerned.

2. Method according to claim 1, characterised thereby, that additional selector switch means (U) are provided when the number of the destinations respectively to be selected is greater than the number of the destination keys (ZT).

3. Method according to claim 1, characterised thereby, that each individual destination key (ZT) is inscribed with several names, designations and/or subscriber's numbers.

4. Method according to claim 1, characterised thereby, that indicating elements (AE), which indicate the state of engagement of the internal destinations, are associated with the destination keys (ZT).

**Revendications**

1. Procédé pour l'exploitation multiple de touches de destination (ZT) sur des terminaux, en particulier des postes de travail et d'interrogation (MVP) dans un central téléphonique, en particulier des installations multiples de courtier, qui peuvent être connectées à plusieurs lignes de raccordement ou qui ont accès direct à celles-ci, et dans lesquelles sont prévues des touches de destination (ZT) au moyen desquelles une liaison intérieure directe peut être etablie par simple pression sur des touches, ou dans lesquelles le numéro d'appel nécessaire pour établir une liaison extérieure est sélectionné automatiquement et dans ce but une mémoire (SP) est sélectionnée par les touches de destination (ZT), laquelle mémoire contient les informations qui servent pour établir des liaisons, caractérisé en ce qu'aprés la manipulation d'une touche de ligne (LT) pour l'occupation d'une ligne extérieure ou aprés la manipulation d'une touche d'extension (HT) pour l'occupation d'une ligne intérieure, il est seulement nécessaire d'actionner une touche de destination (ZT) pour établir une liaison, la sélection des groupes de numéros d'appel ou de raccordement désignés dans les mémoires (SP1 à SP3) à associer chaque fois aux touches de destination (ZT) est déterminée par la nature de la ligne de raccordement avec laquelle une installation multiple de courtier (MVP) est directement connectée, de maniére que des liaisons extétieures et intérieures, en particulier des installations multiples de coutiers (MVP), peuvent etre établies entre elles au moyen des mêmes touches de destination, et

en ce qu'une touche de programmation (P) est prévue, par la manipulation de laquelle est lancé un processus d'emmagasinement par lequel le numéro d'appel d'une destination sélectionnée sur le clavier de sélection (WT) et visible sur le panneau indicateur (ANZ), se trouve mémorisé à l'emplacement dans les mémoires (SP1, SP2 et SP 3), qui est marqué par la simple manipulation subséquente de la touche de destination (ZT) correspondante.

2. Procédé selon la revendication 1, caractérisé en ce que les moyens de commande de sélection (U) sont prévus lorsque le nombre des destinations à sélectionner est plus grand que le nombre de touches de destination (ZT).

3. Procédé selon la revendication 1, caractérisé en ce que chaque touche de destination individuelle (ZT) es tindiquée par plusieurs noms, désignations et/ou numéros d'appel.

4. Procédé selon la revendication 1, caractérisé en ce qu'aux touches de destination (ZT) sont associés des organes d'indication (AE) qui indiquent l'état d'occupation des destinations intérieures.

EP 0 188 676 B1

Fig. 1

Fig. 2